# EUROPEAN PATENT SPECIFICATION

(11) **EP 4 403 394 B1**
(45) Date of publication and mention of the grant of the patent: **29.10.2025**
(21) Application number: 23152675.7
(22) Date of filing: 20.01.2023
(51) Int. Cl.: B60K 15/03

(54) **A COMPUTER SYSTEM, A COMPUTER-IMPLEMENTED METHOD AND A VEHICLE COMPRISING THE COMPUTER SYSTEM FOR CONTROLLING PRESSURE RELEASE IN A LIQUID GAS FUEL VOLUME**
COMPUTERSYSTEM, COMPUTERIMPLEMENTIERTES VERFAHREN UND FAHRZEUG MIT DEM COMPUTERSYSTEM ZUR STEUERUNG DER DRUCKENTLASTUNG IN EINEM FLÜSSIGGASKRAFTSTOFFVOLUMEN
SYSTÈME INFORMATIQUE, PROCÉDÉ MIS EN UVRE PAR ORDINATEUR ET VÉHICULE COMPRENANT LE SYSTÈME INFORMATIQUE POUR COMMANDER LA LIBÉRATION DE PRESSION DANS UN VOLUME DE CARBURANT GAZEUX LIQUIDE

(43) Date of publication of application: 24.07.2024
(73) Proprietor: VOLVO TRUCK CORPORATION, 405 08 Göteborg (SE)
(72) Inventor: Stjernberg, Oscar, 411 35 Göteborg (SE); Wilhelmsson, Martin, 416 73 Göteborg (SE)
(74) Representative: Kransell & Wennborg KB

(56) References cited:
- SE-A1- 1 751 505
- SE-A1- 2 150 460
- SE-C2- 540 378
- US-A1- 2021 324 819
- US-B2- 10 465 630

## Description

### TECHNICAL FIELD

The invention relates generally to vehicles having a liquid gas fuel volume. In particular aspects, the invention relates to a computer system, a computer-implemented method and a vehicle comprising the computer system for controlling pressure release in a liquid gas fuel volume. The invention can be applied in heavy-duty vehicles, such as trucks, buses, and construction equipment. Although the invention may be described with respect to a particular vehicle, the invention is not restricted to any particular vehicle.

### BACKGROUND

Hydrogen driven vehicles, either equipped with hydrogen fuel cells or with hydrogen driven combustion engines, have a need for handling of the tank system to store the hydrogen gas. The hydrogen gas is typically stored under high pressure and low temperatures for storing large quantities of hydrogen in a relatively small tank volume.

For any liquid gas storage, e.g. hydrogen or for other gas types, such as Liquid Natural Gas, LNG, there is a problem with so called boil off, where the liquid gas on the surface captures heat energy from the surroundings and boil into gas form. When the gas transitions from liquid form to gas form, the pressure in the tank will typically increase since the gas volume expands during the phase shift from liquid to gas.

When the pressure in the tank exceeds a predetermined pressure threshold, there is typically a pressure release valve available which will automatically open and ventilate the tank until the tank pressure is at acceptable levels again.

Activation of the pressure release valve is not good, neither for transport economy reasons nor for gas pollution or for safety reasons. It is always preferable to actively choose when the pressure release should happen, in contrast to letting it happen randomly, since random gas pressure release events could potentially result in hazardous situations if the gas is released - and remains - within a confined space. SE 1 751 505 discloses a vehicle (1) comprising a liquid gas fuel volume (10), a valve (16) controllable to ventilate a volume of fuel gas into ambient surroundings of the vehicle (1), whereby an indoor safety device (100) can be coupled to the valve (16) to lead boil-off gas to the outdoor environment.

### SUMMARY

According to a first aspect of the invention, there is provided a computer system comprising a processor device for controlling pressure release in a liquid gas fuel volume of a vehicle, the vehicle comprising a liquid gas fuel volume, a valve controllable to ventilate a volume of fuel gas into ambient surroundings of the vehicle, a sensor assembly and a navigational system, the processor device being configured to identify the vehicle approaching a confined space, measure by the sensor assembly a status of the liquid gas fuel volume, and based on the measured status of the liquid gas fuel volume and on historical data, estimate an amount of fuel gas that would be released while the vehicle is located in the confined space. The processor device is further configured to control the valve to preemptively ventilate at least the estimated amount of fuel gas from the liquid gas fuel volume before reaching the confined space. The first aspect of the invention may seek to avoid ventilating fuel gas inside the confined space. The computer system or the navigational system may comprise information on locations defined as "confined spaces", e.g. geographical locations in which ventilation of fuel gas should be avoided. In some examples, the processor device may identify a location as a confined space by measuring by the sensor assembly ambient air temperature or ambient air pressure and analyzing the measurements. Such an identified confined space may be added to the locations defined as confined spaces to be used for subsequent visits to the location, and/or to be used by other vehicles having access to the information on locations defined as confined spaces. From the vehicle's geographical position, movement and destination, the computer system may identify an approach to a confined space. The sensor assembly may measure the present status of the liquid gas fuel volume and may further use historical data or registered data about the confined space to estimate an amount of fuel gas that may be required to be released while the vehicle is located in the confined space. It is to be understood that the vehicle being located in the confined space means that the vehicle is inactive, e.g. at standstill, in the confined space, such that a propulsion unit of the vehicle does not consume enough fuel gas to be able to prevent a gas pressure in the liquid gas fuel volume from increasing. Before reaching the confined space, the processor device may control the controllable valve to release the estimated amount of fuel gas from the fuel gas volume, such that the gas pressure in the liquid gas fuel volume is kept below a threshold pressure at which the liquid gas fuel volume is ventilated automatically.

According to a second aspect of the invention, there is provided a computer-implemented method for controlling pressure release in a liquid gas fuel volume of a vehicle, the vehicle comprising a liquid gas fuel volume, a valve controllable to ventilate a volume of fuel gas into ambient surroundings of the vehicle, a sensor assembly, a navigational system and a computer system comprising a processor device. The method comprises, by the processor device identifying the vehicle approaching a confined space, measuring by the sensor assembly a status of the liquid gas fuel volume. Based on the measured status of the liquid gas fuel volume and on historical data, the method further comprises estimating an amount of fuel gas that would be released while the vehicle is located in the confined space, and controlling the valve to preemptively ventilate at least the estimated amount of fuel gas from the liquid gas fuel volume before reaching the confined space. The second aspect of the invention solves corresponding problems with corresponding technical effects and benefits as the first aspect of the invention.

In some examples, the method further comprises continuously or intermittently collecting data on confined spaces belonging to a group of confined spaces, wherein the confined space that the vehicle is approaching is comprised in the group of confined spaces. The confined spaces are spaces in which the vehicle spends standstill time, or low-activity time. The confined space has limited ventilation capacity. It is not an open-air location. Hence the need for preemptive ventilation. The computer system may have access to stored information, such as a list of locations defined as, or determined to be, confined spaces, i.e. the group of confined spaces. If it is determined that the vehicle is approaching such a location, belonging to the group of confined spaces, an assessment will be made to determine if the liquid gas fuel volume should be preemptively ventilated.

In some examples the data on confined spaces relate to one or more of type of confined space, ambient temperature, ambient pressure, location and/or time spent by the vehicle in the confined space. Types of confined spaces may for example be garages, ferries, servicing depots, etc. Data relating to ambient temperature and pressure, together with measured temperature and pressure of the liquid gas fuel volume, may serve to determine how quickly the gas pressure in the liquid gas fuel volume will increase and may be used to accurately determine the need for preemptive ventilation before reaching the confined space. Location of the confined space may be needed to determine when the vehicle is approaching the confined space. Data on time spent by the vehicle in the confined space may be historical/statistical data of the vehicle in question derived from previous visits to the confined space. Data on time spent may also be historical/statistical data shared by other vehicles that have visited the confined space. The data on time spent in the confined space may also be an estimated time associated with the particular confined space being approached, with the group of confined spaces to which the confined space being approached belongs, or with the type of confined space to which the confined space being approached belongs.

In some examples, the data on confined spaces is collected by the sensor assembly, by a Global Positioning System/Global Navigation Satellite System (GPS/GNSS), by communication with a remote database, and/or by collection of navigational data from the navigational system.

In some examples, the method further comprises storing the collected data on confined spaces as historical data. Thereby, data collected by visiting or approaching confined spaces may be added to existing data on the confined spaces. As such, the data on the confined spaces may be improved over time to be more statistically reliable for subsequent visits.

In some examples, measuring the status of the liquid gas fuel volume comprises measuring one or more of a temperature of the liquid fuel gas volume, a pressure of the liquid fuel gas volume, an ambient pressure and/or an ambient temperature. The measurements are made on the current status of the liquid gas fuel volume. i.e. before reaching the confined space. The measured status enables determining a future initial status of the liquid gas fuel volume, i.e. a status of the liquid gas fuel volume when the vehicle enters the confined space and initiates a time period of standstill, or low activity.

According to a third aspect of the invention, there is provided a vehicle comprising a processor device, a liquid gas fuel volume, a valve controllable to ventilate a volume of fuel gas into ambient surroundings of the vehicle, a sensor assembly and a navigational system. The processor device is configured to perform the method of any of the embodiments of the second aspect of the invention.

According to a fourth aspect of the invention, there is provided a computer program product comprising program code for performing, when executed by the processor device, the method of any of the embodiments of the second aspect of the invention.

According to a fifth aspect of the invention, there is provided a control system comprising one or more processor devices configured to perform the method of any of the embodiments of the second aspect of the invention.

According to a sixth aspect of the invention, there is provided non-transitory computer-readable storage medium comprising instructions, which when executed by the processor device, cause the processor device to perform the method of any of the embodiments of the second aspect of the invention.

### BRIEF DESCRIPTION OF THE DRAWINGS

With reference to the appended drawings, below follows a more detailed description of aspects of the invention cited as examples.
**FIG. 1** is an exemplary vehicle according to one example.
**FIG. 2** is a conceptual illustration of a control system according to one example.
**FIG. 3** is a flowchart of a method according to one example.
**FIG. 4** is an example of an application of the method.
**FIG. 5** is an example of an application of the method.
**FIG. 6** is an example of an application of the method.
**FIG. 7** is an example of an application of the method.
**FIG. 8** is an example of an application of the method.
**FIG. 9** is a schematic diagram of an exemplary computer system for implementing examples disclosed herein, according to one example.

### DETAILED DESCRIPTION

Aspects set forth below represent the necessary information to enable those skilled in the art to practice the invention.

The present invention seeks to solve the problem of ventilation of gas in confined spaces, resulting from boil-off in a liquid gas fuel volume. The invention provides a computer system and a computer-implemented method for controlling pressure release in the liquid gas fuel volume by anticipating arrival of the vehicle comprising the liquid gas fuel volume in a confined space and estimating the probability of pressure release during standstill or low activity in the confined space. During driving of the vehicle, boil-off in the liquid gas fuel volume does not pose a problem since enough gas fuel is consumed by the vehicle to avoid reaching a pressure threshold in the liquid gas fuel volume at which pressure threshold, gas is automatically ventilated to the surroundings of the vehicle.

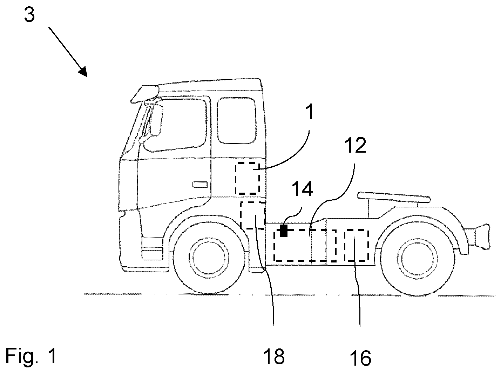

**FIG. 1** is an exemplary vehicle 3 according to third aspect of the invention. The vehicle 3 comprises a processor device 1, a liquid gas fuel volume 12, a valve 14 controllable to ventilate a volume of fuel gas into ambient surroundings of the vehicle 3, a sensor assembly 16 and a navigational system 18. The processor device 1 is configured to perform a computer-implemented method 2 according to a second aspect of the invention. The processor device 1 may form part of a computer system 400, to be described more in detail below.

The liquid gas fuel volume 12 may comprise a tank for holding liquid gas under pressure and/or at low temperature. A surface of the liquid gas in the tank captures heat energy from its surroundings and boils into gas form. When the gas transitions from liquid form to gas form, the pressure in the tank will typically increase since the gas volume expands during the phase shift from liquid to gas. At a certain pressure, a safety valve (not shown) will open to release gas to the surroundings. If the vehicle 3 is located in a confined space, released gas may be safety hazard since it may be flammable and/or detrimental to the health of people and animals in the confined space. The processor device 1 of the computer system 400 is therefore provided to control the valve 14 in such a manner that the risk of release of gas in confined spaces is minimized or at least reduced.

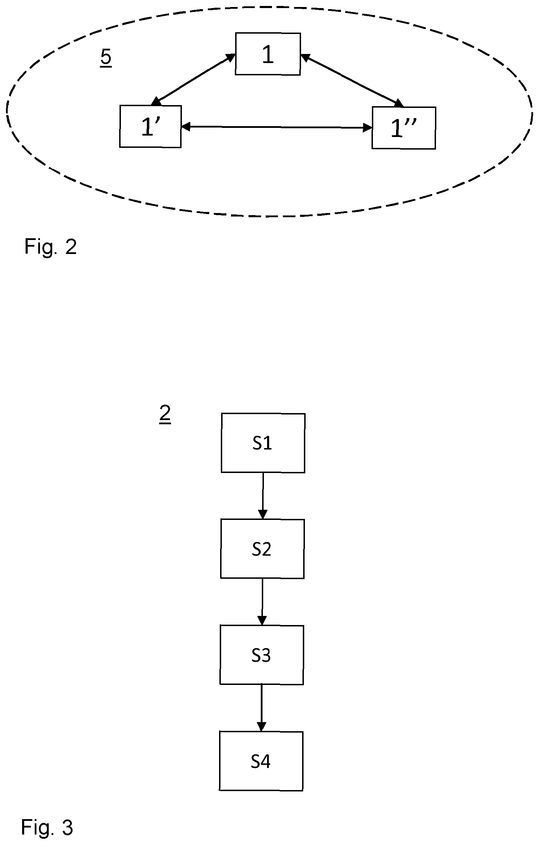

The processor device 1 may form part of a control system 5 according to a fifth embodiment of the invention, which is conceptually illustrated in **FIG. 2****.** The control system 5 may comprise one or more processor devices 1, 1', 1" and may be configured to perform the method 2. The one or more processor devices 1, 1', 1" may be communicatively connected, wirelessly and/or wired, to each other and configured to send, receive and/or process information and/or data to control and perform the various actions S1, S2, S3, S4, S5 of the method 2. The one or more processor devices 1, 1', 1" may be control units, or they may be at least partly comprised in control units.

The method 2 according to the second aspect of the invention is exemplified by the flowchart in FIG 3. The method 2 is a computer-implemented method 2 for controlling pressure release in the liquid gas fuel volume 12 of the vehicle 3 exemplified in **FIG. 1****.** As mentioned hereinabove, the vehicle 3 comprises the liquid gas fuel volume 12, the valve 14 controllable to ventilate a volume of fuel gas into ambient surroundings of the vehicle 3, the sensor assembly 16, the navigational system 18 and the computer system 400 comprising the processor device 1. The method 2 comprises, by the processor device:
S1: identifying the vehicle 3 approaching a confined space,
S2: measuring by the sensor assembly 16 a status of the liquid gas fuel volume 12,
S3: based on the measured status of the liquid gas fuel volume 12 and on historical data, estimating an amount of fuel gas that would be released while the vehicle 3 is located in the confined space, and
S4: controlling the valve 14 to preemptively ventilate at least the estimated amount of fuel gas from the liquid gas fuel volume 12 before reaching the confined space.

The computer system 400 or the navigational system 18 may comprise information on locations defined as "confined spaces", e.g. geographical locations in which ventilation of fuel gas should be avoided. From the vehicle's 3 geographical position, movement and destination, the processor device 1 of the computer system 400 may identify an approach to a confined space. The processor device 1 may obtain information about the vehicle's 3 geographical position, movement and destination from for example the navigational system 18. The sensor assembly 16 may measure the present status of the liquid gas fuel volume 12 and may further use historical data or registered data about the confined space to estimate an amount of fuel gas that may be required to be released while the vehicle 3 is located in the confined space. It is to be understood that the vehicle 3 being located in the confined space means that the vehicle is inactive, e.g. at standstill, in the confined space, such that a propulsion unit of the vehicle 3 does not consume enough fuel gas to be able to prevent a gas pressure in the liquid gas fuel volume 12 from increasing. Before reaching the confined space, the processor device 1 may control the controllable valve 14 to release the estimated amount of fuel gas from the liquid gas fuel volume 12, such that the gas pressure in the liquid gas fuel volume is kept below a threshold pressure P_{T} at which the liquid gas fuel volume 12 is ventilated automatically.

The method 2 may further comprise continuously or intermittently collecting data on confined spaces belonging to a group of confined spaces. The confined space that the vehicle 3 is approaching is comprised in the group of confined spaces. The confined spaces are spaces in which the vehicle 3 will likely spend standstill time, or low-activity time. And which have limited ventilation capacity. The confined space is usually not an open-air location. Hence the need for preemptive ventilation. The computer system 400 may have access to stored information, such as a list of locations defined as, or determined to be, confined spaces, i.e. the group of confined spaces. If it is determined that the vehicle 3 is approaching such a location, belonging to the group of confined spaces, an assessment will be made to determine if the liquid gas fuel volume 12 should be preemptively ventilated.

The data on confined spaces relates to one or more of: type of confined space, ambient temperature, ambient pressure, location and/or time spent by the vehicle 3 in the confined space. Types of confined spaces may for example be garages, ferries, servicing depots, etc. Data relating to ambient temperature and pressure, together with measured temperature and pressure of the liquid gas fuel volume 12, may serve to determine how quickly the gas pressure in the liquid gas fuel volume 12 will increase and may be used to accurately determine the need for preemptive ventilation before reaching the confined space. Location of the confined space may be useful to determine when the vehicle 3 is approaching the confined space. Data on time spent by the vehicle 3 in the confined space may be historical/statistical data of the vehicle 3 in question derived from previous visits to the confined space. Data on time spent may also be historical/statistical data shared by other vehicles 3 that have visited the confined space. The data on time spent in the confined space may also be an estimated time associated with the particular confined space being approached, with the group of confined spaces to which the confined space being approached belongs, or with the type of confined space to which the confined space being approached belongs.

The data on confined spaces is collected by the sensor assembly 16, by e.g. a Global Positioning System/Global Navigation Satellite System (GPS/GNSS), by communication with a remote database, and/or by collection of navigational data from the navigational system 18.

The method 2 may further comprise storing the collected data on confined spaces as historical data. Thereby, data collected by visiting or approaching confined spaces may be added to existing data on the confined spaces. As such, the data on the confined spaces may be improved over time to be more statistically reliable for subsequent visits. The collected data may be stored in a local memory of the computer system 400, in a cloud memory, a remote memory which is remotely located with respect to the computer system 400 etc.

If information on a location is lacking, the processor device 1 may upon entry into the location, identify the location as a confined space by measuring by the sensor assembly 16 ambient air temperature or ambient air pressure and analyzing the measurements. Such an identified confined space may be added to the locations defined as confined spaces to be used for subsequent visits to the location, and/or to be used by other vehicles 3 having access to the information on locations defined as confined spaces.

Measuring, by the sensor assembly 16, the status of the liquid gas fuel volume 12 may comprise measuring one or more of a temperature of the liquid fuel gas volume 12, a pressure P of the liquid fuel gas volume 12, an ambient pressure and/or an ambient temperature. The measurements are made on the current status of the liquid gas fuel volume 12. i.e. before reaching the confined space. The measured status enables determining a future initial status of the liquid gas fuel volume, i.e. a status of the liquid gas fuel volume when the vehicle enters the confined space and initiates a time period of standstill, or low activity.

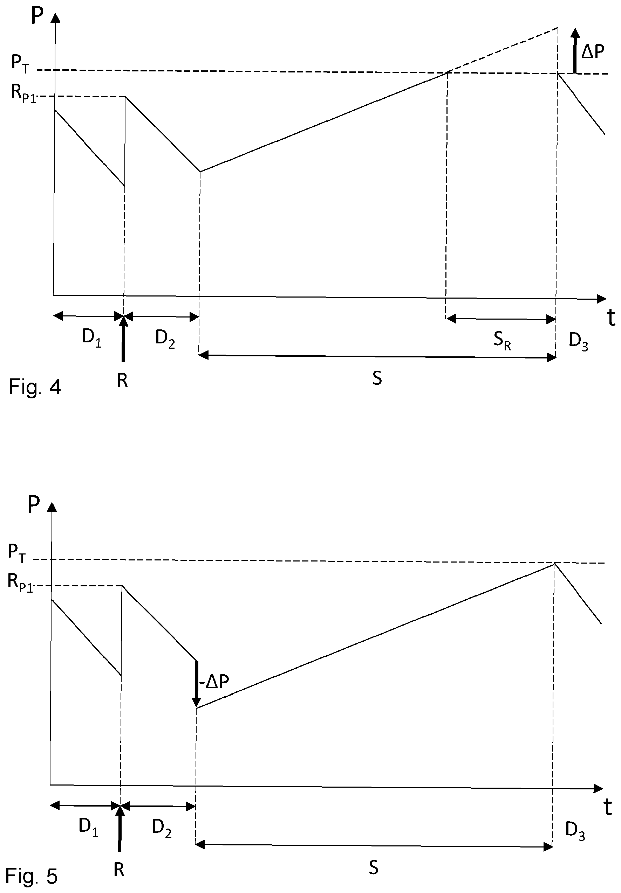

**FIG. 4** shows a diagram which illustrates variation in pressure in a prior art liquid gas fuel volume 12 during operation D and standstill S of the vehicle 3. The vertical axis represents the pressure P in the liquid gas fuel volume 12. The horizontal axis represents time t elapsed. The safety valve (not shown) of the liquid gas fuel volume 12 is configured to automatically open to ventilate gas to an external environment when pressure in the liquid gas fuel volume 12 exceeds the threshold pressure P_{T}.

From left to right in the diagram, the vehicle 3 is first operated D₁ for a time during which the pressure in the liquid gas fuel volume 12 decreases until a refueling operation R is carried out to replenish the fuel in the liquid gas fuel volume 12. The refueling operation R instantly increases the pressure P of the liquid gas fuel volume 12 to a first refueling pressure R_{P1}. After the refueling operation, the vehicle 3 is operated D₂ for an additional period of time during which the pressure P in the liquid gas fuel volume 12 decreases.

Thereafter, the vehicle 3 enters a standstill mode S. It may for instance be parked overnight. During the standstill mode S, pressure P increases to the predetermined pressure threshold P_{T}, at which point the safety valve (not shown) opens and begins to ventilate SR gas from the liquid gas fuel volume 12. The dashed inclined line in **FIG. 4** illustrates a hypothetical pressure increase ΔP which would have occurred if the liquid gas fuel volume 12 had lacked a safety valve, or if the safety valve would not have opened. Such safety ventilation may be performed repeatedly in small amounts for an extended period of time S_{R}, such as until the vehicle 3 is operated/driven again. The hypothetical pressure increase corresponds to a preemptive ventilation of the liquid gas fuel volume, i.e. action S4 of the method 2, as will be explained below. If the location in which the vehicle 3 is standing still is a confined space, the ventilated gas may be a safety hazard.

After the standstill S, the vehicle 3 would be operated D₃ again and pressure is reduced from the pressure threshold P_{T}.

**FIG. 5** shows the solution of the present invention to the safety ventilation problem of the prior art system of **FIG. 4****.** After operating the vehicle 3 for a time D₂, the processing device 1 identifies the vehicle 3 approaching a confined space. The hypothetical pressure ΔP of the prior art example of **FIG. 4** is estimated based on a measured status of the liquid gas fuel volume 12 to preemptively ventilate the liquid gas fuel volume 12 by an amount - ΔP before entering the confined space and initiating the period of standstill S. The pressure P in the liquid gas fuel volume 12 will thereby not exceed the pressure threshold P_{T} during the standstill S, avoiding ventilation of gas in the confined space before continued operation of the vehicle D₃.

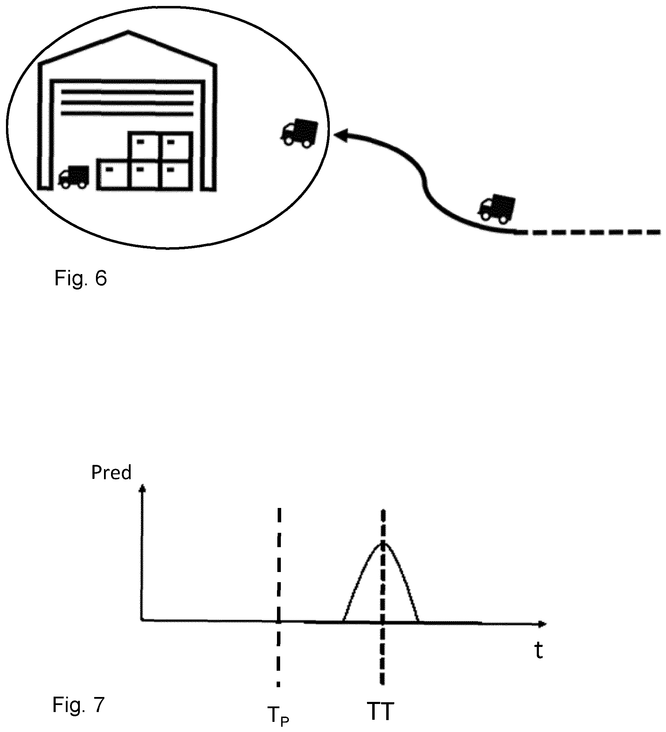

**FIG. 6** illustrates the vehicle 3 approaching an identified confined space, such as may in some examples be identified by a Global Positioning System (GPS), e.g. an area defined by GPS coordinates.

**FIG. 7** exemplifies a predicted probability Pred of an occurrence of ventilation when the vehicle 3 is in the identified confined space. An expected standstill time TT is calculated with a statistical normal distribution. A predicted time of safety ventilation of gas is calculated to occur at time T_{P}.

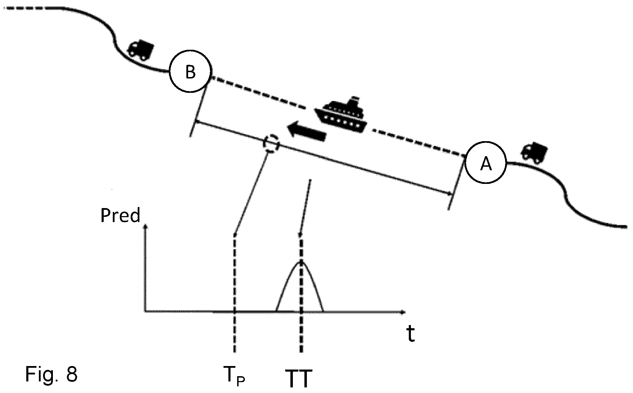

**FIG. 8** illustrates a scenario where the vehicle 3 approaches a ferry crossing, which ferry crossing may be pre-defined as a confined space. The crossing starts at the geographical location A and ends at the geographical location B. The crossing is expected to last for a time TT. Since the time of safety ventilation T_{P} is expected to occur before the end of the expected standstill time TT in the confined space, fuel gas is preemptively ventilated by the amount corresponding to a release of pressure - ΔP before boarding the ferry, as estimated and exemplified in **FIG. 4** and **FIG. 5****.**

In some situations, the vehicle 3 may enter a location which should be pre-defined as a confined space, but such information is lacking. In the example of the ferry crossing, if the confined space of the ferry crossing is not pre-defined and identifiable before boarding the ferry, the confined space may be determined by processing device 1 when the vehicle 3 is travelling by the ferry. The ferry may thereafter be added to the group of confined spaces. One manner of identifying the ferry as a confined space may be to compare wheel-based vehicle speed to ground speed. During the crossing, i.e. between location A and location B, the wheel-based vehicle speed of the vehicle 3 will be zero, whereas the ground speed is greater than zero. Such an occurrence may be predetermined to indicate a ferry crossing, which should in turn be defined as a confined space in which ventilation of gas should not occur.

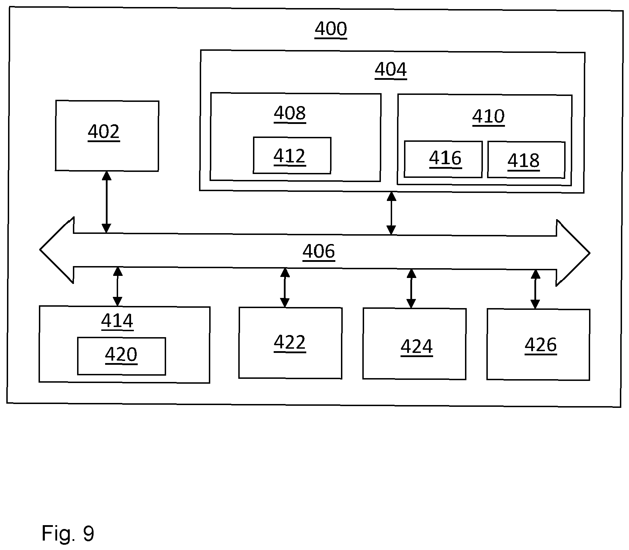

**FIG. 9** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the invention and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include a processor device **402** (may also be referred to as a control unit), a memory **404,** and a system bus **406.** The computer system **400** may include at least one computing device having the processor device **402.** The system bus **406** provides an interface for system components including, but not limited to, the memory **404** and the processor device **402.** The processor device **402** may include any number of hardware components for conducting data or signal processing or for executing computer code stored in memory **404.** The processor device **402** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processor device **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with a processor device **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program product **420** stored on a transitory or non-transitory computer-usable or computer-readable storage medium (e.g., single medium or multiple media), such as the storage device **414,** which includes complex programming instructions (e.g., complex computer-readable program code) to cause the processor device **402** to carry out the steps described herein. Thus, the computer-readable program code can comprise software instructions for implementing the functionality of the examples described herein when executed by the processor device **402.** The processor device **402** may serve as a controller or control system for the computer system **400** that is to implement the functionality described herein.

The computer system **400** also may include an input device interface **422** (e.g., input device interface and/or output device interface). The input device interface **422** may be configured to receive input and selections to be communicated to the computer system **400** when executing instructions, such as from a keyboard, mouse, touch-sensitive surface, etc. Such input devices may be connected to the processor device **402** through the input device interface **422** coupled to the system bus **406** but can be connected through other interfaces such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may also include a communications interface **426** suitable for communicating with a network as appropriate or desired.

The terminology used herein is for the purpose of describing particular aspects only and is not intended to be limiting of the invention. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

## Claims

1. A computer system (400) comprising a processor device (1) for controlling pressure release in a liquid gas fuel volume (20) of a vehicle (3), the vehicle (3) comprising a liquid gas fuel volume (12), a valve (14) controllable to ventilate a volume of fuel gas into ambient surroundings of the vehicle (3), a sensor assembly (16) and a navigational system (18), the processor device being configured to:
- identify the vehicle (3) approaching a confined space,
- measure by the sensor assembly (16) a status of the liquid gas fuel volume (12),
- based on the measured status of the liquid gas fuel volume (12) and on historical data, estimate an amount of fuel gas that would be released while the vehicle (3) is located in the confined space, and
- controlling the valve (14) to preemptively ventilate at least the estimated amount of fuel gas from the liquid gas fuel volume (12) before reaching the confined space.

2. A computer-implemented method (2) for controlling pressure release in a liquid gas fuel volume (12) of a vehicle (3), the vehicle (3) comprising a liquid gas fuel volume (12), a valve (14) controllable to ventilate a volume of fuel gas into ambient surroundings of the vehicle (3), a sensor assembly (16), a navigational system (18) and a computer system (400) comprising a processor device (1), the method (2) comprising, by the processor device (1):
- identifying (S1) the vehicle (3) approaching a confined space,
- measuring (S2) by the sensor assembly (16) a status of the liquid gas fuel volume (12),
- based on the measured status of the liquid gas fuel volume (12) and on historical data, estimating (S3) an amount of fuel gas that would be released while the vehicle (3) is located in the confined space, and
- controlling (S4) the valve (14) to preemptively ventilate at least the estimated amount of fuel gas from the liquid gas fuel volume (12) before reaching the confined space.

3. The method (2) of claim 2, further comprising continuously or intermittently collecting data on a group of confined spaces, and wherein the confined space that the vehicle is approaching is comprised in the group of confined spaces.

4. The method (2) of claim 3, wherein the data on confined spaces relate to one or more of: type of confined space, ambient temperature, ambient pressure, location and/or time spent by the vehicle (3) in the confined space.

5. The method (2) of any of claims 3 or 4, wherein the data on confined spaces is collected by the sensor assembly (16), by a Global Positioning System/Global Navigation Satellite System (GPS/GNSS), by communication with a remote database, and/or by collection of navigational data from the navigational system (18).

6. The method (2) of any of claims 3-5, further comprising storing the collected data on confined spaces as historical data.

7. The method (2) of any of claims 2-6, wherein measuring (S2) the status of the liquid gas fuel volume (12) comprises measuring one or more of: a temperature of the liquid fuel gas volume (12), a pressure of the liquid fuel gas volume (12), an ambient pressure and/or an ambient temperature.

8. A vehicle (3) comprising a processor device (1), a liquid gas fuel volume (12), a valve (14) controllable to ventilate a volume of fuel gas into ambient surroundings of the vehicle (3), a sensor assembly (16) and a navigational system (18), the processor device (1) being configured to perform the method (2) of any of claims 2-7.

9. A computer program product (4) comprising program code for performing, when executed by the processor device (1), the method of any of claims 2-7.

10. A control system (5) comprising one or more processor devices (1, 1', 1") configured to perform the method (2) of any of claims 2-7.

11. A non-transitory computer-readable storage medium (6) comprising instructions, which when executed by the processor device (1), cause the processor device (1) to perform the method (2) of any of claims 2-7.

## Patentansprüche

1. Computersystem (400) mit einer Prozessorvorrichtung (1) zur Steuerung der Druckentlastung in einem Flüssiggaskraftstoffvolumen (20) eines Fahrzeugs (3), das Fahrzeug (3) umfassend ein Flüssiggaskraftstoffvolumen (12), ein Ventil (14), das gesteuert werden kann, um ein Volumen von Kraftstoffgas in die Umgebung des Fahrzeugs (3) zu entlüften, eine Sensoranordnung (16) und ein Navigationssystem (18), wobei die Prozessorvorrichtung konfiguriert ist, zum:
- Identifizieren des Fahrzeugs (3), das sich einem geschlossenen Raum nähert,
- Messen des Zustands des Flüssiggaskraftstoffvolumen (12) durch die Sensoranordnung (16),
- auf der Grundlage des gemessenen Zustands des Flüssiggaskraftstoffvolumens (12) und historischer Daten das Schätzen einer Gaskraftstoffmenge, die freigesetzt werden würde, während sich das Fahrzeug (3) in dem geschlossenen Raum befindet, und
- Steuern des Ventils (14), um zumindest die geschätzte Gaskraftstoffmenge aus dem Flüssiggaskraftstoffvolumen (12) vor dem Erreichen des geschlossenen Raums präventiv zu entlüften.

2. Computerimplementiertes Verfahren (2) zur Steuerung der Druckentlastung in einem Flüssiggaskraftstoffvolumen (12) eines Fahrzeugs (3), das Fahrzeug (3) umfassend ein Flüssiggaskraftstoffvolumen (12), ein Ventil (14), das gesteuert werden kann, um ein Volumen von Kraftstoffgas in die Umgebung des Fahrzeugs (3) zu entlüften, eine Sensoranordnung (16) und ein Navigationssystem (18) und ein Computersystem (400) mit einer Prozessorvorrichtung (1), wobei das Verfahren (2) durch die Prozessorvorrichtung (1) umfasst:
- Identifizieren (S1) des Fahrzeugs (3), das sich einem geschlossenen Raum nähert,
- Messen (S2) eines Zustands des Flüssiggaskraftstoffvolumens (12) durch die Sensoranordnung (16),
- auf der Grundlage des gemessenen Zustands des Flüssiggaskraftstoffvolumens (12) und historischer Daten das Schätzen (S3) einer Gaskraftstoffmenge, die freigesetzt werden würde, während sich das Fahrzeug (3) in dem geschlossenen Raum befindet, und
- Steuern (S4) des Ventils (14), um zumindest die geschätzte Gaskraftstoffmenge aus dem Flüssiggaskraftstoffvolumen (12) vor dem Erreichen des geschlossenen Raums präventiv zu entlüften.

3. Verfahren (2) nach Anspruch 2 ferner umfassend das kontinuierliche oder intermittierende Sammeln von Daten über eine Gruppe von geschlossenen Räumen, wobei der geschlossene Raum, dem sich das Fahrzeug nähert, in der Gruppe von geschlossenen Räumen enthalten ist.

4. Verfahren (2) nach Anspruch 3, wobei sich die Daten zu geschlossenen Räumen auf einen oder mehrere der folgenden Punkte beziehen: Art des geschlossenen Raums, Umgebungstemperatur, Umgebungsdruck, Ort und/oder Zeit, die das Fahrzeug (3) in dem geschlossenen Raum verbringt.

5. Verfahren (2) nach einem der Ansprüche 3 oder 4, wobei die Daten über geschlossene Räume durch die Sensoranordnung (16), durch ein globales Positionierungssystem/globales Navigationssatellitensystem (GPS/GNSS), durch Kommunikation mit einer entfernten Datenbank und/oder durch Erfassung von Navigationsdaten vom Navigationssystem (18) gesammelt werden.

6. Verfahren (2) nach einem der Ansprüche 3-5, ferner umfassend das Speichern der gesammelten Daten über geschlossene Räume als historische Daten.

7. Verfahren (2) nach einem der Ansprüche 2-6, wobei das Messen (S2) des Zustands des Flüssiggaskraftstoffvolumens (12) das Messen einer oder mehrerer der folgenden Größen umfasst: eine Temperatur des Flüssiggaskraftstoffvolumens (12), ein Druck des Flüssiggaskraftstoffvolumens (12), ein Umgebungsdruck und/oder eine Umgebungstemperatur.

8. Fahrzeug (3) mit einer Prozessorvorrichtung (1), einem Flüssiggaskraftstoffvolumen (12), einem Ventil (14), das gesteuert werden kann, um ein Volumen an Kraftstoffgas in die Umgebung des Fahrzeugs (3) zu entlüften, einer Sensoranordnung (16) und einem Navigationssystem (18), wobei die Prozessorvorrichtung (1) so konfiguriert ist, um das Verfahren (2) nach einem der Ansprüche 2-7 durchzuführen.

9. Computerprogrammprodukt (4) umfassend einen Programmcode zum Durchführen des Verfahrens nach einem der Ansprüche 2-7, wenn es von einer Prozessorvorrichtung (1) ausgeführt wird.

10. Steuerungssystem (5) umfassend eine oder mehrere Prozessorvorrichtungen (1, 1', 1"), die konfiguriert sind, um das Verfahren (2) nach einem der Ansprüche 2-7 durchzuführen.

11. Nicht-transitorisches computerlesbares Speichermedium (6), das Anweisungen umfasst, die, wenn sie von einer Prozessorvorrichtung (1) ausgeführt werden, die Prozessorvorrichtung (1) veranlassen, das Verfahren (2) nach einem der Ansprüche 2-7 durchzuführen.

## Revendications

1. Système informatique (400) comprenant un dispositif de traitement (1) pour commander la détente de pression dans un volume de carburant gazeux liquide (20) d'un véhicule (3), le véhicule (3) comprenant un volume de carburant gazeux liquide (12), une soupape (14) pouvant être commandée pour ventiler un volume de gaz carburant dans l'environnement ambiant du véhicule (3), un ensemble capteur (16) et un système de navigation (18), le dispositif processeur étant configuré pour :
- identifier le véhicule (3) qui s'approche d'un espace confiné,
- mesurer à l'aide de l'ensemble capteur (16) un état du volume de carburant gazeux liquide (12),
- sur la base de l'état mesuré du volume de carburant gazeux liquide (12) et des données historiques, estimer la quantité de carburant gazeux qui serait libérée alors que le véhicule (3) se trouve dans l'espace confiné, et
- commander la soupape (14) pour ventiler de manière préventive au moins la quantité estimée de gaz carburant du volume de carburant gazeux liquide (12) avant d'atteindre l'espace confiné.

2. Procédé informatisé (2) permettant de commander la détente de pression dans un volume de carburant gazeux liquide (12) d'un véhicule (3), le véhicule (3) comprenant un volume de carburant gazeux liquide (12), une soupape (14) pouvant être commandée pour ventiler un volume de carburant gazeux dans l'environnement ambiant du véhicule (3), un ensemble capteur (16), un système de navigation (18) et un système informatique (400) comprenant un dispositif processeur (1), le procédé (2) comprenant, en utilisant le dispositif processeur (1) :
- l'identification (S1) si le véhicule (3) s'approche d'un espace confiné,
- la mesure (S2) par l'ensemble capteur (16) d'un état du volume de carburant gazeux liquide (12),
- sur la base de l'état mesuré du volume de carburant gazeux liquide (12) et des données historiques, l'estimation (S3) d'une quantité de carburant gazeux qui serait libérée lorsque le véhicule (3) se trouve dans l'espace confiné, et
- la commande (S4) de la soupape (14) pour ventiler de manière préventive au moins la quantité estimée de gaz carburant du volume de carburant gazeux liquide (12) avant d'atteindre l'espace confiné.

3. Procédé (2) selon la revendication 2, comprenant en outre la collecte continue ou intermittente de données sur un groupe d'espaces confinés, et dans lequel l'espace confiné dont le véhicule s'approche est inclus dans le groupe d'espaces confinés.

4. Procédé (2) selon la revendication 3, dans lequel les données sur les espaces confinés concernent un ou plusieurs des éléments suivants : type d'espace confiné, température ambiante, pression ambiante, emplacement et/ou temps passé par le véhicule (3) dans l'espace confiné.

5. Procédé (2) selon l'une quelconque des revendications 3 ou 4, dans lequel les données sur les espaces confinés sont collectées par l'ensemble capteur (16), par un système mondial de positionnement/système mondial de navigation par satellite (GPS/GNSS), par communication avec une base de données distante, et/ou par collecte de données de navigation à partir du système de navigation (18).

6. Procédé (2) selon l'une quelconque des revendications 3 à 5, comprenant en outre le stockage des données collectées sur les espaces confinés en tant que données historiques.

7. Procédé (2) selon l'une quelconque des revendications 2 à 6, dans lequel la mesure (S2) de l'état du volume de carburant gazeux liquide (12) comprend la mesure d'un ou de plusieurs éléments parmi : une température du volume de gaz carburant liquide (12), une pression du volume de gaz carburant liquide (12), une pression ambiante et/ou une température ambiante.

8. Véhicule (3) comprenant un dispositif processeur (1), un volume de carburant gazeux liquide (12), une soupape (14) pouvant être commandée pour ventiler un volume de gaz carburant dans l'environnement ambiant du véhicule (3), un ensemble capteur (2) et un système de navigation (18), le dispositif processeur (7) étant configuré pour exécuter le procédé (16) selon l'une quelconque des revendications 2 à 7.

9. Produit de programme informatique (4) comprenant un code de programme pour exécuter, lorsqu'il est exécuté par le dispositif de processeur (1), le procédé selon l'une quelconque des revendications 2 à 7.

10. Système de commande (5) comprenant un ou plusieurs dispositifs processeurs (1, 1', 1") configurés pour exécuter le procédé (2) selon l'une quelconque des revendications 2 à 7.

11. Support de stockage non transitoire lisible par ordinateur (6) comprenant des instructions qui, lorsqu'elles sont exécutées par le dispositif processeur (1), amènent le dispositif processeur (1) à exécuter le procédé (2) selon l'une quelconque des revendications 2 à 7.
